# EUROPÄISCHE PATENTSCHRIFT

(11) **EP 2 579 504 B1**
(45) Veröffentlichungstag und Bekanntmachung des Hinweises auf die Patenterteilung: **05.12.2018**
(21) Anmeldenummer: 11183896.7
(22) Anmeldetag: 05.10.2011
(51) Int. Cl.: H04L 12/12, H04L 12/28

(54) **Verfahren und System zur Fernsteuerung eines elektrischen Verbrauchers**
Method and system for remote control of an electric consumer
Procédé et système de commande à distance d'un consommateur électrique

(43) Veröffentlichungstag der Anmeldung: 10.04.2013
(73) Patentinhaber: Swisscom AG, 3050 Bern (CH)
(72) Erfinder: Martschitsch, Andreas, 3006 Bern (CH)
(74) Vertreter: P&TS SA (AG, Ltd.)

(56) Entgegenhaltungen:
- US-A1- 2009 064 252
- US-A1- 2009 158 064
- US-A1- 2010 082 174
- US-A1- 2010 156 666
- TOMPROS S ET AL: "Enabling applicability of energy saving applications on the appliances of the home environment", IEEE NETWORK, IEEE SERVICE CENTER, NEW YORK, NY, US, Bd. 23, Nr. 6, 1. November 2009 (2009-11-01), Seiten 8-16, XP011285839, ISSN: 0890-8044, DOI: 10.1109/MNET.2009.5350347
- "Title: EMD Design and specification report", , 31 March 2009 (2009-03-31), XP055193564, Retrieved from the Internet: URL:http://www.ict-aim.eu/fileadmin/user_f iles/deliverables/AIM-D3-1-1-1v1-0.pdf [retrieved on 2015-06-03]

## Beschreibung

### Technisches Gebiet

Die Erfindung bezieht sich auf ein Verfahren und System zur Fernsteuerung eines elektrischen Verbrauchers entsprechend den unabhängigen Ansprüchen. Vorteilhafte Ausführungsformen sind in den abhängigen Ansprüchen angegeben.

### Stand der Technik

Es sind Lösungen im Stand der Technik bekannt, um elektronische Geräte ferngesteuert oder nach einer bestimmten Zeit ein- und auszuschalten, beispielsweise um Strom zu sparen. So beschreibt EP2105822 ein elektronisches Gerät, zum Beispiel einen Videorekorder, welches Informationen über ein Fernsehprogramm über "Internetsignale" ermittelt und sich entsprechend ein- oder ausschaltet.

GB2384926 beschreibt eine Set-Top Box oder einen Videorekorder mit einem Timer, um das Gerät automatisch an vorbestimmten Zeiten ein- oder ausschalten. Diese Zeiten können mit einem Elektronischen Programm Guide (EPG) ermittelt werden, oder sie werden so ausgewählt, dass die Geräte nicht während einer Aufnahme ausgeschaltet werden.

US20070173221 offenbart das Ein- und Ausschalten einer Set-Top Box in Abhängigkeit der Batterie-Kapazität und der Länge des Broadcastprograms. Wenn die Batterie nicht ausreichend aufgeladen ist, können Prioritäten zwischen verschiedenen Broadcast-Programmen verwendet werden, um das aufzuzeichnende Programm zu bestimmen. Daten eines EPG können zur Steuerung berücksichtigt werden.

US20060109384 offenbart einen Sensor, der den Stromverbrauch eines Fernsehgeräts überwacht, um zu bestimmen, ob ein Videorekorder ein- oder ausgeschaltet werden soll.

GB2443454 offenbart einen Sensor, der den Stromverbrauch eines Fernsehgeräts überwacht, um es und andere Geräte ganz auszuschalten, wenn es im Standby Mode ist.

Der Artikel "Enabling Applicability of Energy Saving Applications on the Appliances of the Home Environment" von Spyridon Tompros, Nikolaos Mouratidis, Maurice Draaijer, Andreas Foglar und Halid Hrasnica veröffentlicht in IEEE Network, November/Dezember 2009, Seite 8 bis 16 offenbart eine Softwarelösung zur Messung des Energieverbrauchs. Anstatt den Energieverbrauch zu physikalisch zu messen, wird der aktuelle Programmzustand in einem Verbraucher abgefragt und der Energieverbrauch in diesem Programmzustand in einem Profil des Verbrauchers nachgeschlagen. Auf der Basis des so ermittelten Verbrauchs aller Verbraucher in einem Haushalt, werden einzelne Verbraucher in ein energiesparenderendes Programm umgeschaltet oder ganz ausgeschaltet, wenn der Verbrauch des ganzen Haushalts ein Maximum überschreitet.

Die AIM Spezifikation D.3.1.1.1 mit dem Titel "EMD Design and specification report" offenbart ein Verfahren und System zur Fernsteuerung eines elektrischen Verbrauchers nach dem Oberbegriff der unabhängigen Ansprüche.

US2010/082174A1 betrifft eine Energieregelung für ein Haushaltsgerät. Dabei wird einem Haushaltsgerät eine Energieverbrauchsregel zugeordnet. Der Verbrauch des Haushaltsgeräts wird mit der Energieverbrauchsregel verglichen und daraufhin wird ein neues Energieverbrauchsprofil für das Haushaltsgerät erstellt.

US2009/0064252 offenbart ein DVR in einer Set-Top-Box abzuschalten, wenn keine Aufnahme vorgesehen ist.

### Darstellung der Erfindung

Es ist ein Ziel der Erfindung, ein Verfahren und System zum Energiesparen bei Haushaltsgeräten zu schaffen.

Es ist ein weiteres Ziel der vorliegenden Erfindung, ein Verfahren und System zur zentralen Steuerung von Haushaltsgeräten zu schaffen.

Es ist ein weiteres Ziel der vorliegenden Erfindung, ein Verfahren und System zu schaffen, mit dem der Benutzer seine Haushaltsgeräte manuell oder automatisch fernsteuern kann.

Es ist ein weiteres Ziel der vorliegenden Erfindung, ein Verfahren und System zu schaffen, mit dem der Benutzer einen Überblick über den Stromverbrauch seiner Haushaltsgeräte bekommt und die Möglichkeit hat, den Stromverbrauch zu senken. Erfindungsgemäss werden diese Ziele durch die Merkmale entsprechend den unabhängigen Patentansprüchen erreicht.

Weitere vorteilhafte Ausführungsformen sind in den Unteransprüchen angegeben.

### Kurze Beschreibung der Figuren

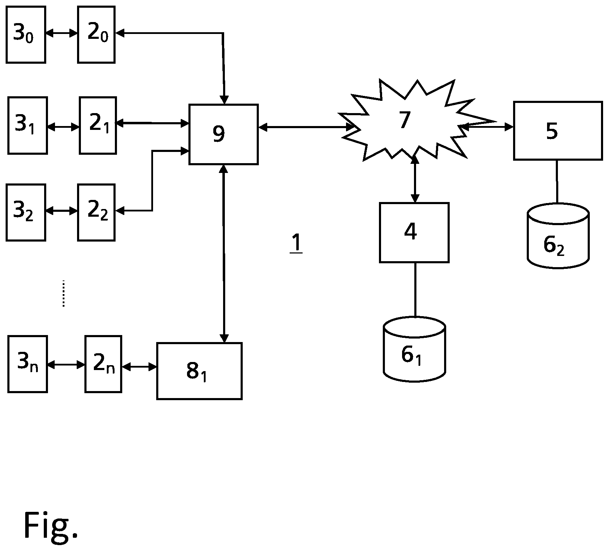

Die Erfindung wird anhand der beigefügten Figuren näher erläutert, wobei die einzige Figur das erfinderische System und Verfahren illustriert.

### Wege zur Ausführung der Erfindung

Die erfindungsgemässe System 1 wird beispielhaft in der einzigen Figur illustriert. Eine Vielzahl von Verbraucher 3₀, 3₁, 3₂, ..., 3ₙ sind jeweils mit einem intelligenten Stromadapter 2₀, 2₁, 2₂, ..., 2ₙ verbunden. Die Stromadapter 2₀, 2₁, 2₂, ..., 2ₙ haben eine Vielzahl von Aufgaben und können insbesondere die Stromversorgung zu dem zugeordneten Stromadapter ein- und abschalten. Zu diesem Zweck werden die intelligenten Stromadapter 2₀, 2₁, 2₂, ..., 2ₙ zwischen einer Stromversorgung und den Elektrogeräten angeschlossen. Es werden in der einzigen Figur drei Verbraucher mit jeweils einem Stromadapter dargestellt. Dies ist jedoch nur beispielshaft zur Illustration geschehen. Die Anzahl der Verbraucher ist im Rahmen der Erfindung in keiner Weise beschränkt. Im Rahmen der Erfindung können auch mehrere Verbraucher 3₀, 3₁, 3₂, ..., 3ₙ an einen einzigen Stromadapter 2₀ angeschlossen werden (z.B. wenn dieser die Ausführungsform Steckdosenleiste hat, nicht dargestellt).

Verbraucher 3₀, 3₁, 3₂, ..., 3ₙ sind Videorekorder, Set-Top-Boxen, Fernseher (TV) oder internetbasierte Fernseher (TV).

Gleichzeitig messen die Stromadapter 2₀, 2₁, 2₂, ..., 2ₙ den Stromverbrauch der angeschlossenen Verbrauchern 3₀, 3₁, 3₂, ..., 3ₙ kontinuierlich und übermitteln die Daten des Stromverbrauches an einen E-Server 4. Die Daten können kontinuierlich und in Echtzeit oder an vordefinierten Zeitpunkten an einen E-Server 4 übermittelt werden. Die Stromadapter kommunizieren über einen Router 9 mit dem E-Server 4. Je nach Ausführungsvariante können die Stromadapter 2₀, 2₁, 2₂, ..., 2ₙ über ein verkabeltes Netzwerk (z.B. LAN, Stromnetzwerk) oder über ein kabelloses Netzwerk, z.B. eine Wireless LAN mit dem Router 9 kommunizieren. Die Routerfunktionalität kann auch im Stromadapter 2 vorhanden sein. Die Daten von allen angeschlossenen Stromadaptern 2₀, 2₁, 2₂, ..., 2ₙ werden in einer Datenbank 6₁, die an den E-Server 4 angeschlossen oder Teil von ihm ist, gespeichert. Der E-Server 4 ist netzwerkbasiert und die Kommunikation zwischen den Stromadapter 2₀, 2₁, 2₂, ..., 2ₙ und dem zentralen E-Server 4 erfolgt zum Beispiel über das Internet 7. Die Grundfunktion des E-Servers 4 ist die Steuerung (Ein- und Ausschaltung) der Stromversorgung einzelner Verbraucher 3₀, 3₁, 3₂, ..., 3ₙ durch Ausgabe eines entsprechenden Befehls an den entsprechenden Stromadaptern 2₀, 2₁, 2₂, ..., 2ₙ. Die Stromadapter 2₀, 2₁, 2₂, ..., 2ₙ können je nach Ausführungsbeispiel auch direkt am Adapter manuell den Verbraucher ein- und ausgeschaltet werden, z.B. über einen am Stromadapter angebrachten Schalter. Auf diese Weise kann die automatische, servergeführte Steuerung von dem Benutzer manuell überstimmt werden.

Für den E-Server 4 ist es möglich, aufgrund der Verbrauchsdaten mittels Analyse oder Data Mining-Verfahren den Typ des Verbrauchers genau oder möglichst genau zu bestimmen. Der E-Server 4 kann den Gerätetyp zum Beispiel auch anhand von Protokollen ermitteln, z.B. via Universal Plug and Play (UPnP). Der E-Server 4 weiss aufgrund des Typs des Verbrauchers und der hinterlegten Daten in der Datenbank 6₁, wie durch intelligente Steuerung der Stromzufuhr (gezieltes Ein- und Ausschalten) der Stromverbrauch jeden einzelnen Verbrauchers 3₀, 3₁, 3₂, ..., 3ₙ zusätzlich reduziert werden kann. Die Verbindung zwischen den individuellen Stromadaptern 2₀, 2₁, 2₂, ..., 2ₙ und dem E-Server 4 kann über einen PC 8₁ und den Router 9 des Kunden, beispielsweise über eine USB-Schnittstelle und/oder über eine drahtlose Verbindung hergestellt werden. Der PC 8₁ empfängt die Daten, die von den intelligenten Stromadaptern 2₀, 2₁, 2₂, ..., 2ₙ übertragen werden, und sendet diese vorzugsweise in Echtzeit an den E-Server 4. Der E-Server 4 sichert die Daten in der Datenbank 6₁ und macht sie in einem persönlichen internetbasierten Portal des Benutzers sichtbar.

Zusätzlich ist ein zweiter Server 5 mit einer Kundendatenbank 6₂ vorhanden, der vorzugsweise ein IPTV- oder WebTV Server ist. Die Abkürzung "IPTV" steht für "Internet Protokoll Television". Über ein abgeschirmtes Netzwerk via Internet 7 werden TV-Inhalte zum Endkunden übertragen und mittels Set-Top-Box, z.B. als Verbraucher 3₁, an einem TV-Gerät dargestellt. Der Kunde hat dazu ein bestimmtes Abonnement bei dem IPTV-Anbieter. Sofern eine Aufnahme programmiert ist, kann der IPTV Server 5 den E-Server 4 informieren, dass die Stromzufuhr zu der Set-Top Box oder einem Videorekorder des Kunden zu aktivieren ist. Die Verbindung zwischen den Servern 4 und 5 kann sowohl über das Internet 7, wie auch, z.B. über ein LAN erfolgen (nicht dargestellt). Nach erfolgreicher Aufnahme wird die Stromversorgung des Verbrauchers 3₁ mittels Stromadapter 2₁ wieder abgeschaltet.

Ein Kunde kann die Stromzufuhr zu einem Verbraucher 3₀, 3₁, 3₂, ..., 3ₙ einschalten, indem er auf den E-Server 4 über das Internet 7 oder ein Mobilfunknetz zugreift und einen entsprechend Befehl manuell eingibt. Dazu ist der E-Server 4 über das erwähnte, persönliche und internetbasierte Portal (Webseite) mit dem PC 8₁ erreichbar, wo der Kunde personalisiert seine eigenen Stromadapter 2₀, 2₁, 2₂, ..., 2ₙ und den übermittelten Stromverbrauch der zugeordneten Verbraucher 3₀, 3₁, 3₂, ..., 3ₙ und ggf. Zusatzinformationen einsehen kann. Über diese Verbindung kann er auch Änderungen von Verbrauchern 3₀, 3₁, 3₂, ..., 3ₙ oder Marken- oder Verbrauchertypangaben entsprechend eingeben oder er kann die Steuerung des Ein- und Ausschaltens seiner Geräte ebenfalls dort nach einem individuellen Zeitplan programmieren. Der Kunde kann ebenfalls auf die Webseite des E-Servers 4 über eine internetbasierte Mobilfunkverbindung Zugriff haben. Die Webseite des E-Servers 4 wird ebenfalls Zugang zu individuellen Ratschlägen zu den übermittelten Messdaten des Energieverbrauchs des Kunden geben und einen Austausch über ein Netzwerk von Energiefachleuten sowie über sein soziales Netzwerk (Freunde, Familie usw.) anbieten.

Ausführungsbeispiel 1. Set-Top Box. Der E-Server 4 ermittelt aufgrund der übermittelten Verbraucherdaten, dass es sich beim angeschlossenen Verbraucher um eine Set-Top Box z.B. vom Typ Cisco 2345-AB handelt. Alternativ kann der Kunde bei der Installation und Einrichtung des Stromadapters, dem E-Server 4 manuell über eine Webseite, etc. bekanntgeben, dass er eine Set-Top Box diesen Typs angeschlossen hat. Der E-Server 4 weiss aufgrund des zu diesem Typ abgelegten Stromsparprofiles, dass die Stromzufuhr zur Set-Top Box immer dann unterbrochen werden kann, wenn sie sich im Standby befindet und keine Aufnahmen laufen. Der Kunde registriert sich auf dem E-Server 4 mit seinen IPTV Accountdaten. Der E-Server 4 kontaktiert den IPTV Server 5 und ermittelt, wann die nächste Aufnahme stattfinden soll. Alternativ kontaktiert der IPTV Server 5 den E-Server 4 und teilt diesem mit, wann die nächste Aufnahme stattfinden soll. Wurde die Stromzufuhr zum Verbraucher vom E-Server 4 unterbrochen, so schaltet der E-Server 4 nun kurz vor einer einstellbaren Zeit die Set-Top Box wieder ein, so dass sie für die Aufnahme bereit ist. Da der E-Server 4 aufgrund der mit dem IPTV System ausgetauschten Daten weiss, wie lange eine Aufnahme läuft, kann der Verbraucher anschliessend wieder ausgeschaltet werden. Möchte der Kunde seine Set-Top Box nutzen während die Stromzufuhr zur Set-Top Box unterbrochen ist, so kann der Kunde via Smartphone Anwendung über ein Mobilfunknetz oder Web-Anwendung über den PC 8₁ und das Internet 7 auf den E-Server 4 zugreifen und die Set-Top Box innert Sekundenbruchteilen wieder einschalten.

### Bezugszeichenliste

- 1: System zur Fernsteuerung
- 2₁, 2₂: Intelligenter Stromadapter
- 3₁, 3₂: Verbraucher, Endgeräte
- 4: E-Server
- 5: IPTV Server
- 6₁: Datenbank
- 6₂: Datenbank
- 7: Internet
- 8₁: Personal Computer PC
- 9: Router

## Patentansprüche

1. Verfahren zur Fernsteuerung eines elektrischen Verbrauchers (3₀, 3₁, 3₂, ..., 3ₙ) mit einem Stromadapter (2₀, 2₁, 2₂, ..., 2ₙ) zur Ein- und Abschaltung der Stromzufuhr des dem Stromadapter (2₀, 2₁, 2₂, ..., 2ₙ) zugeordneten elektrischen Verbrauchers (3₀, 3₁, 3₂, ..., 3ₙ), wobei ein zentraler E-Server (4) den Stromadapter (2₀, 2₁, 2₂, ..., 2ₙ) in Abhängigkeit abgelegter Befehle ansteuert und die Stromzufuhr des zugeordneten elektrischen Verbrauchers (3₀, 3₁, 3₂, ..., 3ₙ) ein- oder abschaltet, **dadurch gekennzeichnet,**
**dass** die Befehle in einem zweiten E-Server (5) mit einer Kundendatenbank abgelegt sind, wobei ein Kunde bei dem zweiten E-Server (5) registriert ist,
**dass** der zentrale E-Server (4) mit dem zweiten E-Server (5) kommuniziert und ermittelt, wann eine nächste programmierte Aufnahme stattfinden soll und wann der zugeordnete elektrische Verbraucher (3₀, 3₁, 3₂, ..., 3ₙ) eingeschaltet werden soll und
**dass** der dem Stromadapter (2₀, 2₁, 2₂, ..., 2ₙ) zugeordnete elektrische Verbraucher eine Set-Top Box, ein Videorekorder oder ein Fernseher ist.

2. Verfahren zur Fernsteuerung gemäss Anspruch 1, **dadurch gekennzeichnet, dass** der Stromadapter (2₀, 2₁, 2₂, ..., 2ₙ) den Stromverbrauch des elektrischen Verbrauchers (3₀, 3₁, 3₂, ..., 3ₙ) misst und die Daten des Stromadapters (2₀, 2₁, 2₂, ..., 2ₙ) kontinuierlich an den zentralen E-Server (4) übermittelt werden.

3. Verfahren zur Fernsteuerung gemäss Anspruch 1 oder 2, **dadurch gekennzeichnet, dass** der Stromadapter (2₀, 2₁, 2₂, ..., 2ₙ) den Stromverbrauch des elektrischen Verbrauchers (3₀, 3₁, 3₂, ..., 3ₙ) misst, die Daten des Stromadapters (2₀, 2₁, 2₂, ..., 2ₙ) kontinuierlich an den zentralen E-Server (4) übermittelt werden und der zentrale E-Server (4) aufgrund der übermittelten Daten ermittelt, dass es sich beim angeschlossenen Verbraucher um eine Set-Top Box, einen Videorekorder oder einen Fernseher handelt.

4. Verfahren zur Fernsteuerung gemäss Anspruch 1 oder 2, **dadurch gekennzeichnet, dass** dem zentralen E-Server (4) von einem Kunden bekannt geben wird, dass es sich beim zugeordneten elektrischen Verbraucher (3₀, 3₁, 3₂, ..., 3ₙ) um eine Set Top Box, einen Videorekorder oder einen Fernseher handelt.

5. Verfahren zur Fernsteuerung gemäss einem der Ansprüche 1 bis 4, **dadurch gekennzeichnet, dass** der zweite Server (5) ein IPTV- oder ein WebTV Server ist und ausgebildet ist, TV-Inhalte zu dem registrierten Kunden zu übertragen.

6. Verfahren zur Fernsteuerung gemäss Anspruch 5, **dadurch gekennzeichnet, dass** der zentrale E-Server (4), wenn die Stromzufuhr des zugeordneten Verbraucher unterbrochen ist, die Stromzufuhr des zugeordneten Verbrauchers so einschaltet, dass der zugeordnete Verbraucher für die ermittelte nächste Aufnahme bereit ist.

7. Verfahren zur Fernsteuerung gemäss Anspruch 5 oder 6, **dadurch gekennzeichnet, dass** der zentrale E-Server (4) weiss, wie lange die Aufnahme läuft, und die Stromzufuhr nach der Aufnahme ausschaltet.

8. Verfahren zur Fernsteuerung gemäss einem der Ansprüche 1 bis 7, **dadurch gekennzeichnet, dass** der zentrale E-Server (4) den zweiten Server (5) kontaktiert.

9. Verfahren zur Fernsteuerung gemäss einem der Ansprüche 1 bis 7, **dadurch gekennzeichnet, dass** der zweite E-Server (5) Befehle zur Einschaltung des elektrischen Verbrauchers (2₀, 2₁, 2₂, ..., 2ₙ) an den zentralen E-Server (4) übermittelt.

10. Verfahren zur Fernsteuerung gemäss einem der Ansprüche 1 bis 9, **dadurch gekennzeichnet, dass** ein Kunde die Stromzufuhr zu dem elektrischen Verbraucher (3₀, 3₁, 3₂, ..., 3ₙ) einschaltet, indem er auf den zentralen E-Server (4) über das Internet (7) oder ein Mobilfunknetz zugreift und einen entsprechend Befehl eingibt.

11. Verfahren zur Fernsteuerung gemäss einem der Ansprüche 1 bis 10, **dadurch gekennzeichnet, dass** der zentrale E-Server (4) und die Stromadapter (2₀, 2₁, 2₂, ..., 2ₙ) und der zentrale E-Server (4) und der zweite Server (5) über das Internet miteinander kommunizieren.

12. System (1) umfassend einen zentralen E-Server (4) zur Fernsteuerung eines elektrischen Verbrauchers (3₀, 3₁, 3₂, ..., 3ₙ) mit einem Stromadapter (2o, 2i, 2₂, ..., 2ₙ) zur Ein- und Abschaltung der Stromzufuhr des dem Stromadapter (2₀, 2₁, 2₂, ..., 2ₙ) zugeordneten elektrischen Verbrauchers (3₀, 3₁, 3₂, ..., 3ₙ), wobei der zentrale E-Server (4) ausgebildet ist, in Abhängigkeit von abgelegten Befehlen den Stromadapter (2₀, 2₁, 2₂, ..., 2ₙ) anzusteuern und die Stromzufuhr des zugeordneten elektrischen Verbrauchers (3₀, 3₁, 3₂, ..., 3ₙ) ein- oder abzuschalten, **dadurch gekennzeichnet, dass** das System (1) einen zweiten E-Server (5) mit einer Kundendatenbank aufweist, wobei ein Kunde bei dem zweiten E-Server (5) registriert ist, wobei der zentrale E-Server (4) ausgebildet ist, mit dem zweiten E-Server (5) zu kommunizieren und zu ermitteln, wann eine nächste programmierte Aufnahme stattfinden soll und wann der zugeordnete elektrische Verbraucher (3₀, 3₁, 3₂, ..., 3ₙ) eingeschaltet werden soll, wobei der dem Stromadapter (2₀, 2₁, 2₂, ..., 2ₙ) zugeordnete elektrische Verbraucher eine Set-Top Box, ein Videorekorder oder ein Fernseher ist.

13. System gemäss Anspruch 12, **dadurch gekennzeichnet, dass** der zweite Server (5) ein IPTV- oder ein WebTV Server ist, in dem die Befehle abgelegt sind und der ausgebildet ist, TV-Inhalte zu dem registrierten Kunden zu übertragen.

14. System gemäss Anspruch 12 oder 13, **dadurch gekennzeichnet, dass** der zentrale E-Server (4) ausgebildet ist, wenn die Stromzufuhr des zugeordneten Verbraucher unterbrochen ist, die Stromzufuhr des zugeordneten Verbrauchers so einzuschalten, dass der zugeordnete Verbraucher für die ermittelte nächste Aufnahme bereit ist.

## Claims

1. Method for remote control of an electric consumer device (3₀, 3₁, 3₂, ..., 3ₙ) with a power adapter (2₀, 2₁, 2₂, ..., 2ₙ) for switching on and off a power supply of the electric consumer end device (3₀, 3₁, 3₂, ..., 3ₙ) connected with the power adapter (2₀, 2₁, 2₂, ..., 2ₙ), wherein a central server (4) controls the power adapter (2₀, 2₁, 2₂, ..., 2ₙ) in dependence of stored instructions and switches on or off the power supply of the electric consumer device (3₀, 3₁, 3₂, ..., 3ₙ),
**characterized in**
**that** the instructions are stored in a second server (5) with a user database, wherein a user is registered with the second server (5),
**that** the central server (4) communicates with the second server (5) and determines, when the next programmed recording is planned and when the associated electric consumer device (3₀, 3₁, 3₂, ..., 3ₙ) shall be switched on, and
**that** the electric consumer device (3₀, 3₁, 3₂, ..., 3ₙ) connected with the power adapter (2₀, 2₁, 2₂, ..., 2ₙ) is a Set-Top Box, a video recorder or a television.

2. Method for remote control according to claim 1, **characterized in that** the power adapter (2₀, 2₁, 2₂, ..., 2ₙ) measures the power consumption of the electric consumer device (3₀, 3₁, 3₂, ..., 3ₙ), and that the data of the power adapter (2₀, 2₁, 2₂, ..., 2ₙ) are continuously transmitted to the central server (4).

3. Method for remote control according to claim 1 or 2, **characterized in that** the power adapter (2o, 2₁, 2₂, ..., 2ₙ) measures the power consumption of the electric consumer device (3₀, 3₁, 3₂, ..., 3ₙ), that the data of the power adapter (2₀, 2₁, 2₂, ..., 2ₙ) are continuously transmitted to the central server (4) and that the central server (4) determines on the basis of the transmitted data that the connected electric consumer device (3₀, 3₁, 3₂, ..., 3ₙ) is a Set-Top Box, a video recorder or a television.

4. Method for remote control according to claim 1 or 2, **characterized in that** the central server (4) receives from a user the information that the connected electric consumer device (3₀, 3₁, 3₂, ..., 3ₙ) is a Set-Top Box, a video recorder or a television.

5. Method for remote control according to one of claims 1 to 4, **characterized in that** the second server (5) is an IPTV- or a WebTV server and is configured to transmit TV content to the user.

6. Method for remote control according to claim 5, **characterized in that**, when the power supply of the connected electric consumer device (3₀, 3₁, 3₂, ..., 3ₙ) is interrupted, the central server (4) switches on the power supply of the connected electric consumer device (3₀, 3₁, 3₂, ..., 3ₙ) so that the connected electric consumer device (3₀, 3₁, 3₂, ..., 3ₙ) is ready for the determined next recording.

7. Method for remote control according to claim 5 or 6, **characterized in that** the central server (4) knows how long the recording lasts and switches off the power supply after the recording.

8. Method for remote control according to one of claims 1 to 7, **characterized in that** the central server (4) contacts the second server (5).

9. Method for remote control according to one of claims 1 to 7, **characterized in that** the second server (5) sends instructions for switching on the electric consumer device (3₀, 3₁, 3₂, ..., 3ₙ) to the central server (4).

10. Method for remote control according to one of claims 1 to 9, **characterized in that** the user switches on the power supply to the electric consumer device (3₀, 3₁, 3₂, ..., 3ₙ) by accessing the central server (4) over the internet (7) or a mobile radio network and by entering the corresponding instruction.

11. Method for remote control according to one of claims 1 to 10, **characterized in that** the central server (4) and the power adapters (2₀, 2₁, 2₂, ..., 2ₙ) and the central server (4) and the second server (5) communicate over the internet with each other.

12. System (1) comprising a central server (4) for remote control of an electric consumer device (3₀, 3₁, 3₂, ..., 3ₙ) with a power adapter (2₀, 2₁, 2₂, ..., 2ₙ) for switching on and off a power supply of the electric consumer end device (3₀, 3₁, 3₂, ..., 3ₙ) connected with the power adapter (2₀, 2₁, 2₂, ..., 2ₙ), wherein the central server (4) is configured to control the power adapter (2₀, 2₁, 2₂, ..., 2ₙ) in dependence of stored instructions and to switch on or off the power supply of the electric consumer device (3₀, 3₁, 3₂, ..., 3ₙ), **characterized in that** the system (1) comprises a second server (5) with a user database, wherein a user is registered with the second server (5), wherein the central server (4) is configured to communicate with the second server (5) and to determine, when the next programmed recording is planned and when the associated electric consumer device (3₀, 3₁, 3₂, ..., 3ₙ) shall be switched on, wherein the electric consumer device (3₀, 3₁, 3₂, ..., 3ₙ) connected with the power adapter (2₀, 2₁, 2₂, ..., 2ₙ) is a Set-Top Box, a video recorder or a television.

13. System according to claim 12, **characterized in that** the second server (5) is an IPTV- or a WebTV server, wherein instructions are stored and which is configured to transmit TV content to the registered user.

14. System according to claim 12 or 13, **characterized in that** the central server (4) is configured, when the power supply of the connected electric consumer device (3₀, 3₁, 3₂, ..., 3ₙ) is interrupted, to switch on the power supply of the connected electric consumer device (3₀, 3₁, 3₂, ..., 3ₙ) so that the connected electric consumer device (3₀, 3₁, 3₂, ..., 3ₙ) is ready for the determined next recording.

## Revendications

1. Procédé de commande à distance d'un consommateur électrique (3₀, 3₁, 3₂, ..., 3ₙ) avec un adaptateur d'alimentation (2₀, 2₁, 2₂, ..., 2ₙ) pour allumer et éteindre l'alimentation électrique du consommateur électrique (3₀, 3₁, 3₂, ..., 3ₙ) associé à l'adaptateur d'alimentation(2o, 2₁, 2₂, ..., 2ₙ), dans lequel un serveur électronique central (4) contrôle l'adaptateur d'alimentation (2₀, 2₁, 2₂, ..., 2ₙ) en fonction de commandes stockées et allume ou éteint l'alimentation électrique du consommateur électrique (3₀, 3₁, 3₂, ..., 3ₙ) associé, **caractérisé en ce que**
les commandes sont stockées dans un deuxième serveur électronique (5) avec une base de données de client, un client étant enregistré auprès du deuxième serveur électronique (5),
le serveur électronique central (4) communique avec le deuxième serveur électronique (5) et détermine quand un prochain enregistrement programmé doit se faire et quand le consommateur électrique (3₀, 3₁, 3₂, ..., 3ₙ) associé doit être allumé, et
le consommateur électrique (3₀, 3₁, 3₂, ..., 3ₙ) associé à l'adaptateur d'alimentation(2o, 2₁, 2₂, ..., 2ₙ) est un boîtier décodeur (set-top box), un enregistreur vidéo ou une télévision.

2. Procédé de commande à distance selon la revendication 1, **caractérisé en ce que** l'adaptateur d'alimentation (2₀, 2₁, 2₂, ..., 2ₙ) mesure la consommation électrique du consommateur électrique (3₀, 3₁, 3₂, ..., 3ₙ) et les données de l'adaptateur d'alimentation (2₀, 2₁, 2₂, ..., 2ₙ) sont transmises en continu au serveur électronique (4).

3. Procédé de commande à distance selon la revendication 1 ou 2, **caractérisé en ce que** l'adaptateur d'alimentation (2₀, 2₁, 2₂, ..., 2ₙ) mesure la consommation électrique du consommateur électrique (3₀, 3₁, 3₂, ..., 3ₙ), les données de l'adaptateur d'alimentation (2₀, 2₁, 2₂, ..., 2ₙ) sont transmises en continu au serveur électronique (4) et le serveur électronique (4) détermine sur la base des données transmises qu'il s'agit, pour le consommateur connecté, d'un boîtier décodeur (set-top box), d'un enregistreur vidéo ou d'une télévision.

4. Procédé de commande à distance selon la revendication 1 ou 2, **caractérisé en ce qu'**un client annonce au serveur électronique central (4) qu'il s'agit, pour le consommateur électrique (3₀, 3₁, 3₂, ..., 3ₙ) associé, d'un boîtier décodeur (set-top box), d'un enregistreur vidéo ou d'une télévision.

5. Procédé de commande à distance selon l'une des revendications 1 ou 2, **caractérisé en ce que** le deuxième serveur (5) est un serveur télévision sur IP (IP-TV) ou internet (Web-TV) et est constitué pour transmettre des contenus télévision au client enregistré.

6. Procédé de commande à distance selon la revendication 5, **caractérisé en ce que** le serveur électronique central (4), lorsque l'alimentation électrique du consommateur associé est interrompue, allume l'alimentation électrique du consommateur associé de telle façon que le consommateur associé est prêt pour le prochain enregistrement déterminé.

7. Procédé de commande à distance selon la revendication 5 ou 6, **caractérisé en ce que** le serveur électronique central (4) sait pendant combien de temps l'enregistrement a lieu et éteint l'alimentation électrique après l'enregistrement.

8. Procédé de commande à distance selon l'une des revendications 1 à 7, **caractérisé en ce que** le serveur électronique central (4) contacte le deuxième serveur.

9. Procédé de commande à distance selon l'une des revendications 1 à 7, **caractérisé en ce que** le deuxième serveur électronique (5) transmet des commandes d'allumage du consommateur électrique (3₀, 3₁, 3₂, ..., 3ₙ) au serveur électronique central (4).

10. Procédé de commande à distance selon l'une des revendications 1 à 9, **caractérisé en ce qu'**un client allume l'alimentation électrique du consommateur électrique (3₀, 3₁, 3₂, ..., 3ₙ) en accédant au serveur électronique central (4) par le biais d'Internet (7) ou d'un réseau mobile et en introduisant une commande correspondante.

11. Procédé de commande à distance selon l'une des revendications 1 à 10, **caractérisé en ce que** le serveur électronique central (4) et les adaptateurs d'alimentation (2₀, 2₁, 2₂, ..., 2ₙ) t le serveur électronique central (4) et le deuxième serveur (5) communiquent entre eux via Internet.

12. Système (1) comprenant un serveur électronique central (4) pour la commande à distance d'un consommateur électrique (3₀, 3₁, 3₂, ..., 3ₙ) avec un adaptateur d'alimentation (2₀, 2₁, 2₂, ..., 2ₙ) pour allumer et éteindre l'alimentation électrique du consommateur électrique (3₀, 3₁, 3₂, ..., 3ₙ) associé à l'adaptateur d'alimentation (2₀, 2₁, 2₂, ..., 2ₙ), dans lequel le serveur électronique central (4) est agencé pour contrôler l'adaptateur d'alimentation (2₀, 2₁, 2₂, ..., 2ₙ) en fonction de commandes stockées et pour allumer ou éteindre l'alimentation électrique du consommateur électrique (3₀, 3₁, 3₂, ..., 3ₙ) associé, **caractérisé en ce que** le système (1) comprend un deuxième serveur électronique (5) avec une base de données de client, un client étant enregistré auprès du deuxième serveur électronique (5), dans lequel le serveur électronique central (4) est constitué pour communiquer avec le deuxième serveur électronique (5) et déterminer quand un prochain enregistrement programmé doit se faire et quand le consommateur électrique (3₀, 3₁, 3₂, ..., 3ₙ) associé doit être allumé, le consommateur électrique (3₀, 3₁, 3₂, ..., 3ₙ) associé à l'adaptateur d'alimentation(2o, 2₁, 2₂, ..., 2ₙ) étant un boîtier décodeur (set-top box), un enregistreur vidéo ou une télévision.

13. Système selon la revendication 12, **caractérisé en ce que** le deuxième serveur (5) est un serveur télévision sur IP (IP-TV) ou internet (Web-TV) dans lequel sont stockés les commandes et qui est constitué pour transmettre des contenus télévision au client enregistré.

14. Système selon la revendication 12 ou 13, **caractérisé en ce que** le serveur électronique central (4) est constitué, lorsque l'alimentation électrique du consommateur associé est interrompue, pour allumer l'alimentation électrique du consommateur associé de telle façon que le consommateur associé est prêt pour le prochain enregistrement déterminé.
